# EUROPEAN PATENT SPECIFICATION

(11) **EP 1 568 561 B1**
(45) Date of publication and mention of the grant of the patent: **14.03.2007**
(21) Application number: 05000515.6
(22) Date of filing: 12.01.2005
(51) Int. Cl.: B60T 8/00, B60T 8/26, B60T 8/32

(54) **Brake device for motorcycle**
Bremsvorrichtung für ein Motorrad
Dispositif de freinage pour motocyclette

(30) Priority: 24.02.2004 JP 2004048813
(43) Date of publication of application: 31.08.2005
(73) Proprietor: HONDA MOTOR CO., Ltd., Tokyo (JP)
(72) Inventor: Tani, Kazuhiko, 4-1, Chuo 1-chome, Wako-shi, Saitama (JP)
(74) Representative: Rupp, Christian

(56) References cited:
- EP-A- 0 533 436
- EP-A- 0 577 076
- US-A- 5 046 787
- PATENT ABSTRACTS OF JAPAN vol. 2003, no. 12, 5 December 2003 (2003-12-05) & JP 2003 285727 A (HONDA MOTOR CO LTD), 7 October 2003 (2003-10-07)

## Description

The present application relates to a brake device for a motorcycle, and specifically relates to a brake device for a motorcycle including a front wheel antilock modulator (hereinafter, referred to as a front wheel ABS), a wheel rotation speed sensor only on the front wheel side, and in particular, a combined brake modulator (hereinafter, referred to as a CBS).

As a brake device for a motorcycle, one including a CBS which distributes an output to front and rear wheel brakes and a front-wheel ABS provided only on the front wheel side for preventing front wheel lock is publicly known (see Patent Literature 1). Moreover, control of the ABS is generally performed by detecting slippage by means of wheel rotation speed sensors individually provided on the front and rear wheels.
[Patent Literature 1] Japanese Patent Publication No. 57(1982)-84277.

### Summary of the most relevant prior art

Patent document EP 0 533 436 A2 relates to a method of and a system for controlling antilock brakes employed in a vehicle such as a motorcycle. The brake control system comprises control unit receiving detecting information from a front wheel speed sensor, a brake pressure detecting means and a brake operation detecting means. This information provide a basis for calculating a road surface condition of a travel road by receiving the friction coefficient (high- or low-µ).

Patent document US 5,046,787 describes an anti-skid control system provided with wheel velocity sensors only for the driving wheels of a motor vehicle. The system uses a vehicle body acceleration sensor in order to classify road surface conditions, in particular in order to distinguish between low-, medium- and high-µ roads.

Patent document JP 2003 285727 relates to a brake device for a motorcycle having a combined brake modulator distributing a braking force to a front wheel brake and a rear wheel brake via a master cylinder unit of the interlock brake modulator.

Incidentally, when the wheel rotation speed sensors are independently provided for the front and rear wheels as described above, the rear wheel varies with drive types (chain type, shaft type, and belt type, etc.) and brake types (disk type, floating disk type, and drum type, etc.), and it is difficult to standardize components thereof. The wheel rotation speed sensor on the rear wheel side comes to be a dedicated component, thus leading to an increase in costs. In addition, the sensor needs to include a pulse ring, thus resulting in less flexibility in arranging the same and a difficult layout.

Thus, it can be considered that the ABS is provided only on the front wheel side as a front wheel ABS and the wheel rotation speed sensor is also provided only for the front wheel. However, it has been difficult to determine an ABS operation on a medium µ road having µ of the road surface not high but not low.
Specifically, when, based on the coefficient of friction µ, types of the road surface are classified into a high µ road having µ so high as not to require the ABS operation, a low µ road having µ so low as to surely require the ABS operation, and a medium µ road therebetween, the determination on the medium µ road has been an issue.

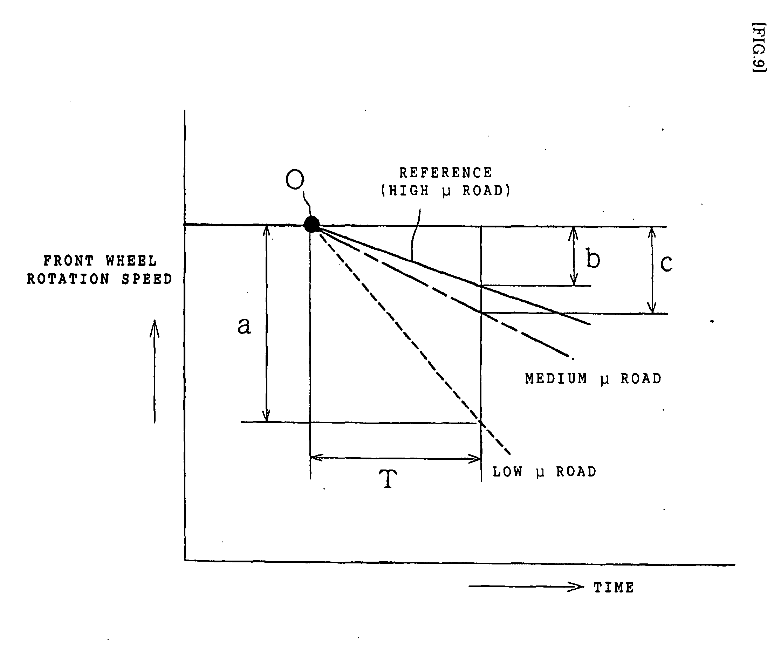

This is described with reference to FIG. 9. FIG. 9 is a graph showing change in front wheel rotation speed during deceleration by the front wheel brake. When a certain amount of brake input is applied at a point O, a standard deceleration line according to the brake input is given by a solid line. When the rotation speed of the front wheel decelerates along this solid line, the road can be judged to be the high µ road. Moreover, when the speed is greatly reduced by a for a predetermined period of time T like a dashed line, it can be judged that slippage is caused and the road is the low µ road requiring the ABS operation.

On the other hand, on the medium µ road as an intermediate range therebetween, it has been difficult to enable judgment of presence/absence of occurrence of slippage, and the judgment whether to actuate the ABS has been difficult.

Therefore, an object of the invention of the present application is to easily make a judgment whether to actuate the ABS, which has been difficult, by providing the ABS and the wheel rotation speed sensor each only on the front wheel side in conjunction with enabling a road surface judgment.

The invention of claim 1 for solving the aforementioned problems is a device for a motorcycle including an ABS preventing wheel lock, including: road surface judging means for calculating a road surface condition of a travel road based on respective detection information from a front wheel rotation speed sensor for detecting rotation speed of a front wheel, brake operation detecting means for detecting a brake operating state, an acceleration sensor for detecting acceleration of a vehicle body, and brake pressure detecting means for detecting brake hydraulic pressure, in which the ABS is a front wheel ABS provided only on a front wheel brake side; in a case where the brake hydraulic pressure is detected to be not more than a predetermined level when the acceleration of the vehicle body is in a predetermined state, the coefficient of friction is judged to be within the predetermined friction coefficient range.

The invention of claim 2 is the device according to claim 1, characterized in that, when the road surface is judged by the road surface judging means to have a coefficient of friction within the predetermined friction coefficient range, the front wheel antilock brake modulator is controlled in the direction to reduce the hydraulic pressure applied to the front wheel brake.

The invention of claim 3 is the device according to claim 1, characterized in that the brake device includes a combined brake modulator distributing an output to the front wheel brake and a rear wheel brake according to an operation of a brake operator.

According to the invention of claim 1, the front wheel ABS provided only on the front wheel brake side is adopted while the wheel rotation speed sensor is provided only on the front wheel side. However, the judgment of the road surface state and the judgment whether to actuate the ABS, which have been difficult, can be made. This is because the road surface judging means makes a judgment combining the acceleration of the vehicle body by the acceleration sensor and the brake hydraulic pressure in addition to the detection information by the front wheel rotation speed sensor and the brake operation detecting means for detecting the brake operating state. According to the invention, the acceleration of the vehicle body and the brake hydraulic pressure are correlated to each other in the judgment on the friction coefficient range. Therefore, when the acceleration of the vehicle body is in the predetermined state and the brake hydraulic pressure is not more than the predetermined level, it can be judged to be within the predetermined friction coefficient range. The judgment on the friction coefficient range can be easily made by the acceleration of the vehicle body and the brake hydraulic pressure.

It is therefore possible to omit installation of the wheel rotation speed sensor on the rear wheel side, and the acceleration sensor with high flexibility in installation on the vehicle body is provided instead. This allows various different types of vehicles to commonly use the components, thus reducing the costs. In addition, the flexibility in design around the rear wheel is greatly enhanced.

According to the invention of claim 2, when a coefficient of friction of the road surface is judged to be within the predetermined friction coefficient range, by controlling the front wheel ABS, the hydraulic pressure applied to the front wheel brake is controlled to be reduced. The predetermined range of the road surfaces µ can be set as an operation range of the ABS.

According to the invention of claim 3, the combined brake modulator is provided, and part of the braking force on the rear wheel brake side is distributed to the front wheel brake side to reduce the braking force borne by the front wheel brake side. It is therefore possible to realize a synergistic effect, i.e. a small influence at the time of front wheel lock and a large tolerance for the judgment whether to actuate the ABS.

Fig. 1 is a view showing a scooter according to an embodiment.
Fig. 2 is a view of a mechanism of a brake according to the embodiment.
FIG. 3 is a view mainly showing a structure of a master cylinder unit.
FIG. 4 is a cross-sectional view taken along a line 4-4 of FIG. 3.
FIG. 5 is a view of a configuration of a front wheel ABS.
FIG. 6 is a schematic view of input limiting means.
FIG. 7 is a view showing a curve of braking force distribution between front and rear wheel brakes.
FIG. 8 is a perspective view of a front portion of a vehicle body showing an arrangement of a brake modulator unit.
FIG. 9 is a graph showing deceleration of front wheel rotation speed during operation of the front wheel brake.
FIG. 10 is a flowchart for road surface µ judgment.

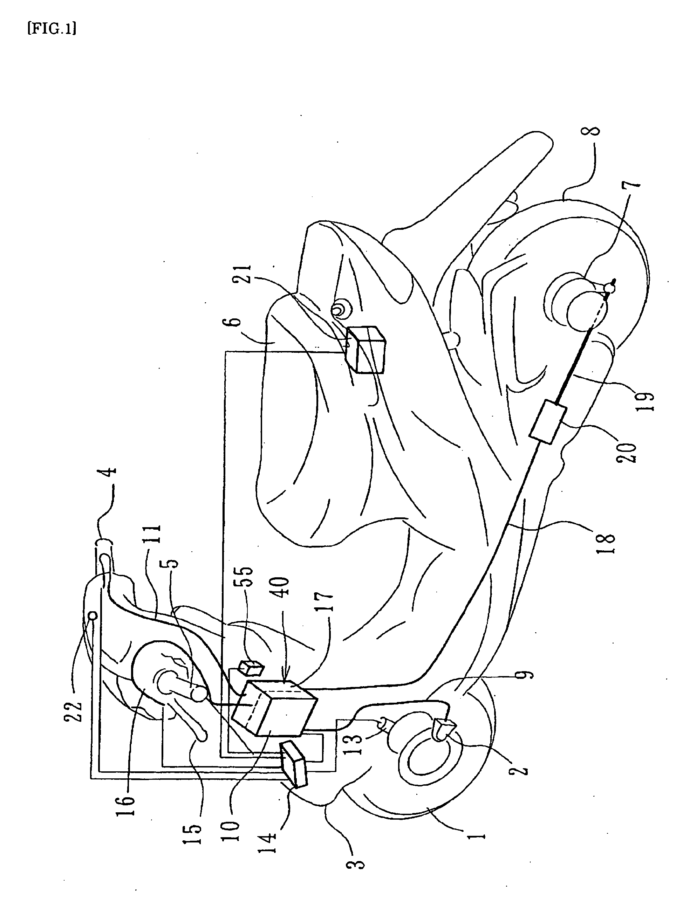

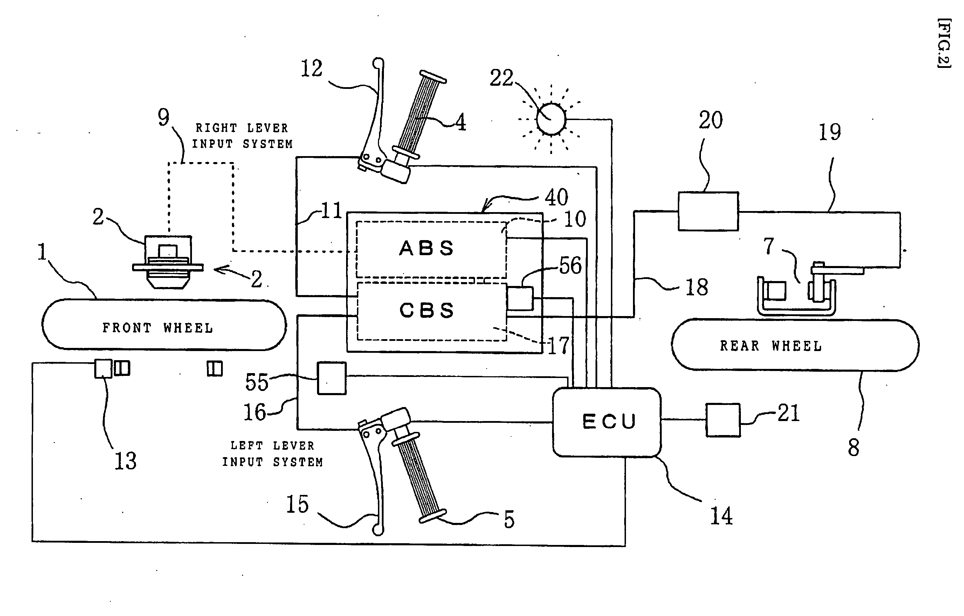

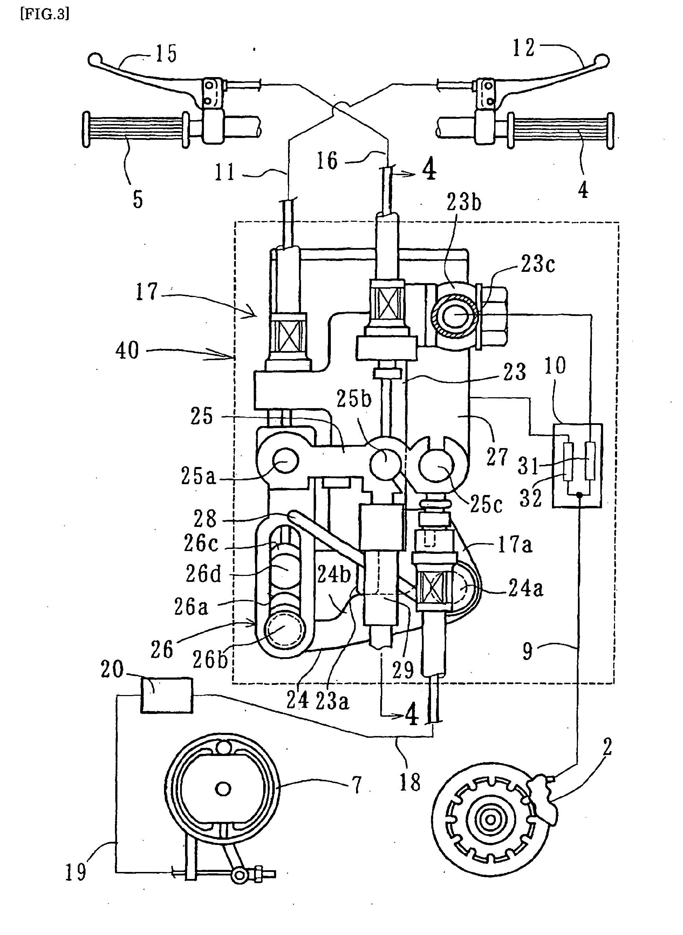

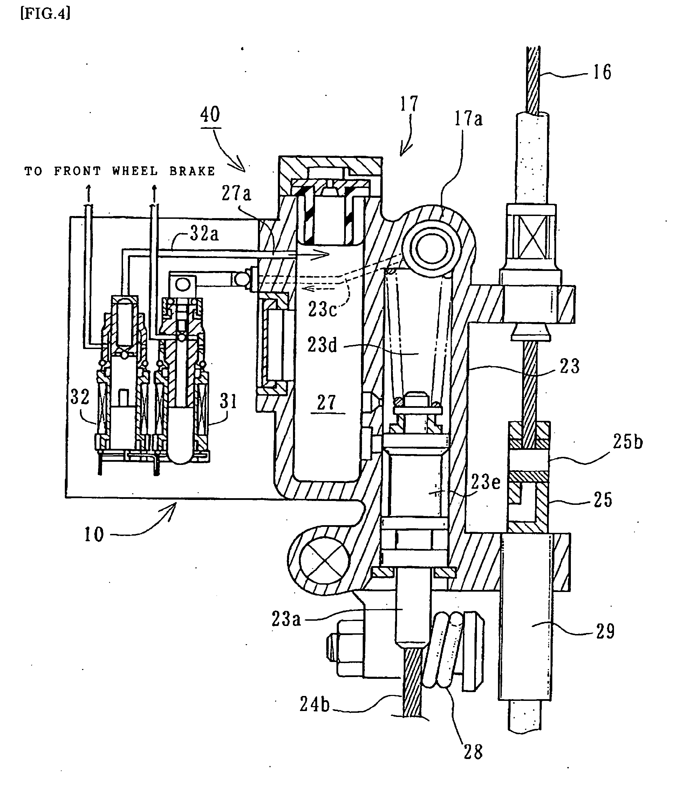

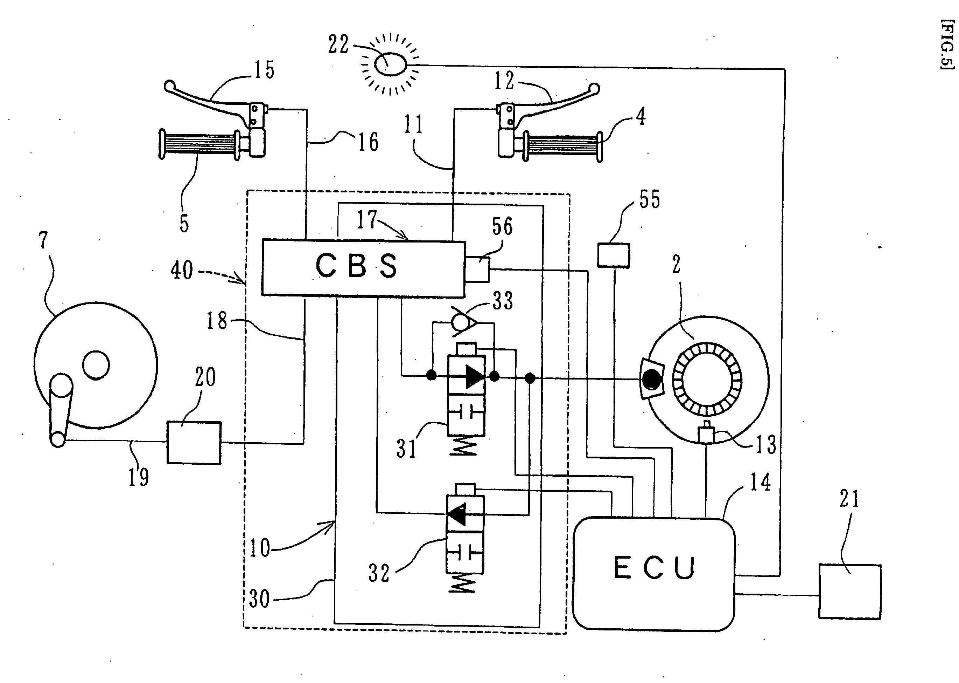

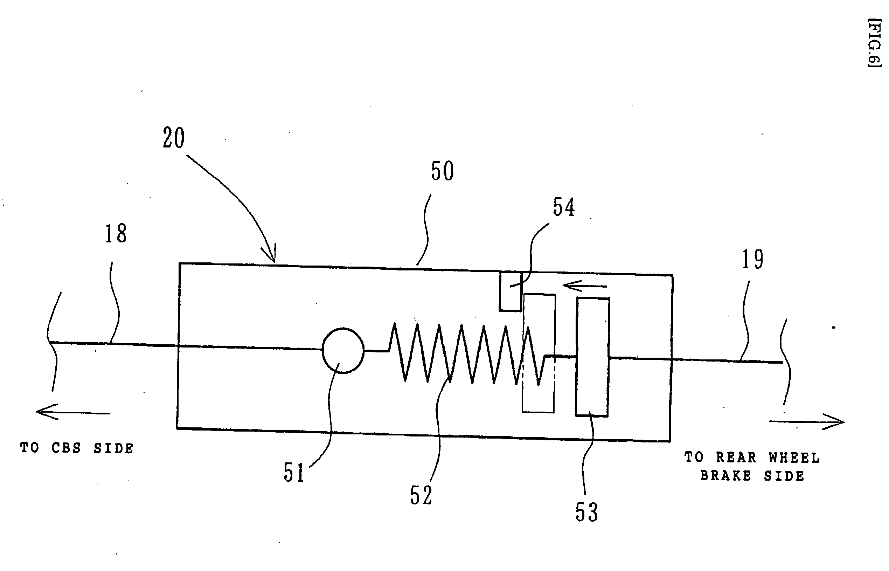

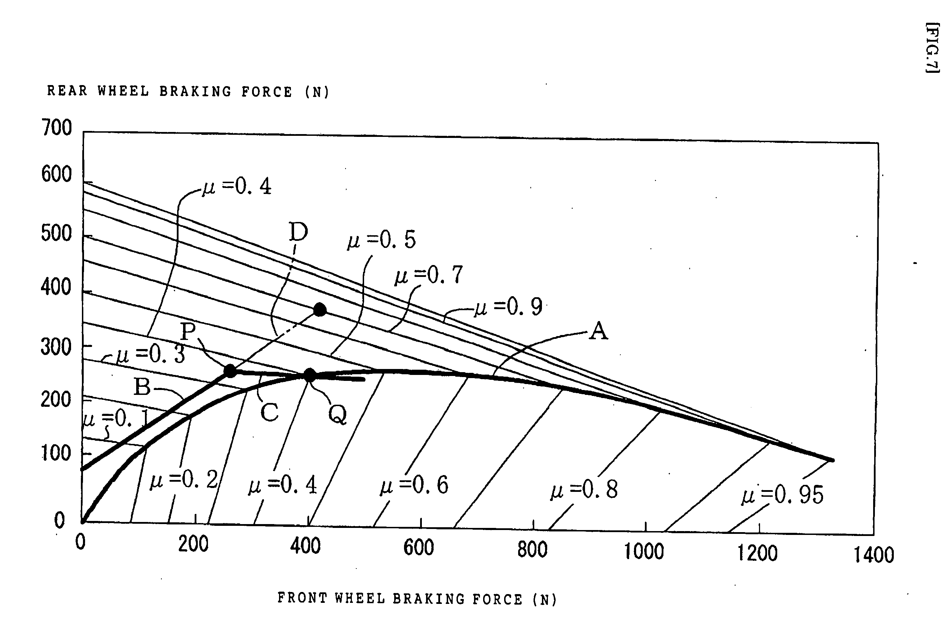

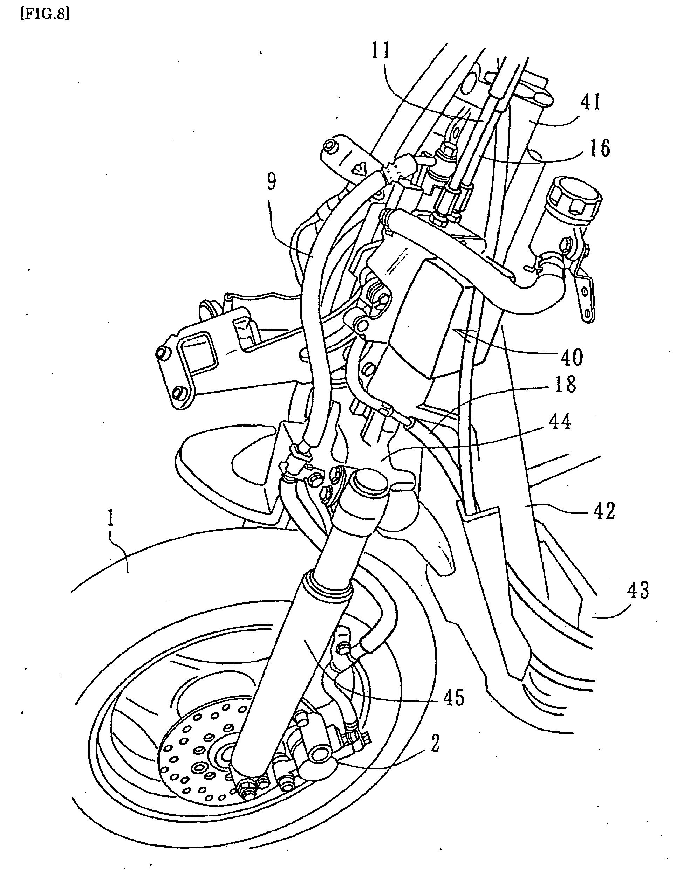

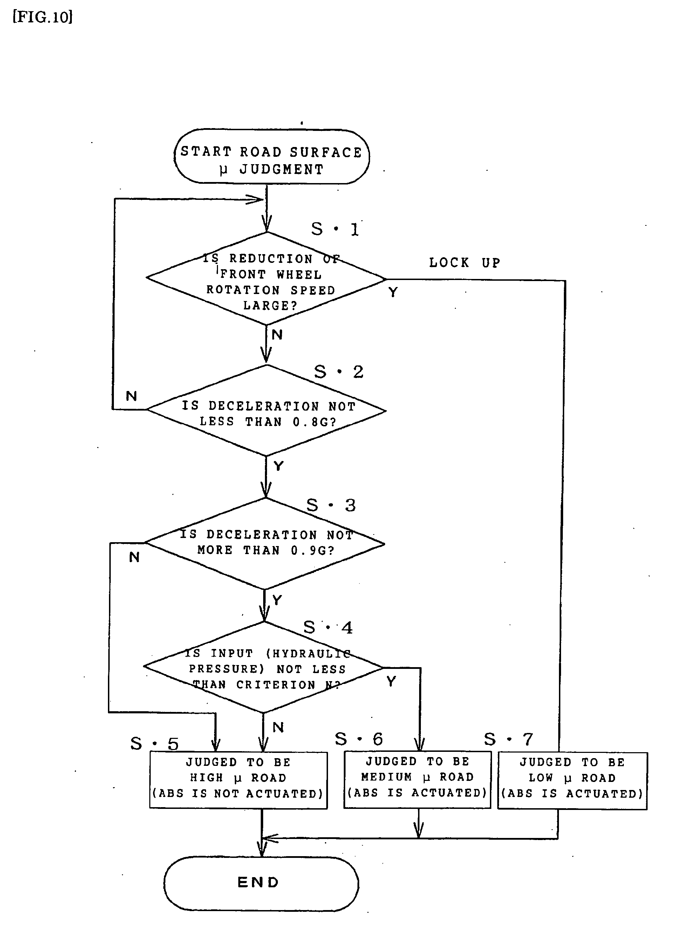

Hereinafter, a description is given of an embodiment with reference to the drawings. FIG. 1 is a view showing a low-floor compact scooter to which the embodiment is applied; FIG. 2 is a block diagram of a brake thereof; FIG. 3 is a view mainly showing a structure of a master cylinder unit in a brake modulator unit; FIG. 4 is a cross-sectional view taken along a line 4-4 of FIG. 3; FIG. 5 is a view mainly showing a structure of an actuator in the brake modulator unit; FIG. 6 is an enlarged schematic view of input limiting means; FIG. 7 is a diagram showing an ideal distribution curve of braking force in front and rear-wheel brakes; FIG. 8 is a perspective view of a front portion of a vehicle body showing an arrangement of the brake modulator unit; FIG. 9 is a graph showing change in the front wheel rotation speed during deceleration by the front wheel brake; and FIG. 10 is a flowchart for a road surface µ judgment.

In FIG. 1, reference numerals 1 to 8 denote a front wheel, a hydraulic front wheel brake, a front cover, right handlebar grip, a left handlebar grip, a seat, a drum-type rear wheel brake constituting a cable-type brake, and a rear wheel (drive wheel), respectively.

As shown in FIG. 2, the front wheel brake 2 is coupled to an actuator 10 constituting a front wheel ABS (to be abbreviated as ABS) through a hydraulic pipe 9 and operated by a right lever 12 provided for the right side handlebar grip 4 through a cable 11. The right lever 12 is one of brake operators.

The actuator 10 controls hydraulic pressure of the front wheel brake 2 so as to prevent the front wheel 1 from locking up according to a braking situation by means of an operation of the right lever 12. The actuator 10 is controlled by an ECU 14 based on an operation signal of the right lever 12 and a detection signal of a front-wheel rotation speed sensor 13 provided on the front wheel 1 side. Moreover, an operation signal of a left lever 15 is also inputted and used for controlling the actuation of the front wheel ABS while the CBS is working as described later.

The left lever 15 of the left handlebar grip 5 operates a master cylinder unit 17, which constitutes the CBS, through a cable 16. The left lever 15 is also one of the brake operators. The master cylinder unit 17 supplies pressurized operating liquid to the front wheel brake 2 through the actuator 10 connected with a hydraulic hose and operates the rear wheel brake 7 through cables 18 and 19 and the input limiting means 20. Accordingly, the front wheel and rear wheel brakes 2 and 7 are actuated in combination, and braking forces of the front wheel and rear wheel brakes 2 and 7 are each properly distributed.

Reference numeral 21 denotes a battery supplying power to the ECU 14, which is arranged under the seat 6 (see FIG. 1). Twenty-two denotes an indicator. The indicator 22 is provided in the vicinity of an instrument panel of a handlebar cover and is lit by the ECU 14 when the front wheel ABS operates. Moreover, the ECU 14 is connected to an acceleration sensor 55 to detect an acceleration of the vehicle body. The acceleration sensor 55 is one publicly known and preferably attached to a vehicle body frame including a later-described head pipe (FIG. 8) within the front cover 3. However, the acceleration sensor 55 can be arbitrarily arranged in other parts of the vehicle body, allowing comparatively high flexibility in arrangement.

Furthermore, the master cylinder unit 17 is provided with a front wheel brake sensor 56. The front wheel brake sensor 56 is set to detect the brake operating state of the front wheel brake 2, that is, a later-described piston stroke, a generated hydraulic pressure, or the like in the master cylinder unit 17 and to send a detected signal thereof to the ECU 14, thus constituting brake operation detecting means in the invention of the present application.

In the embodiment, as apparent in FIGS. 1 and 8, the actuator 10 and the master cylinder unit 17 are integrated to constitute a single brake modulator unit 40 and arranged within the front cover 3 in the vicinity of the front wheel 1 with the ECU 14 (see FIG. 1). As apparent in FIG. 8, the brake modulator unit 40 is supported in the vicinity of the head pipe 41 and covered with the front cover 3 (FIG. 1) together with other arranged components. Reference numerals 42 to 45 in FIG. 8 denote a main frame supporting the head pipe 41, a low-floor type floor, a bottom bridge, and a front fork, respectively.

FIG. 3 is an example of the master cylinder unit 17, which is incorporated in the brake modulator unit 40. When the front wheel brake 2 is independently operated by the right lever 12, the master cylinder unit 17 supplies the hydraulic pressure to the front wheel brake 2 through the actuator 10. On the other hand, when operated by the left lever 15, the master cylinder unit 17 operates the front wheel and rear wheel brakes 2 and 7 in combination.

The master cylinder unit 17 includes a master cylinder 23, a knocker 24, a load distribution lever 25, a coupling member 26, and a reservoir 27 and is integrated with a unit body 17a. One end of the load distribution lever 25 is coupled to an upper portion of the coupling member 26 with a pin 25a, and a middle portion thereof is engaged with a connecting end portion 25b provided at one end of the cable 16. The other end of the load distribution lever 25 is engaged with a connecting end portion 25c provided at one end of the cable 18.

The coupling member 26 is energized to move downward in the drawing by a coil spring 28. The coupling member 26 is provided with a long hole 26a and coupled to one end of the knocker 24 through a pin 26b which is fitted in the long hole 26a and located in the lower end portion in a state shown in the drawing. The pin 26b is integrated with a second member 26c which underlies the coupling member 26 in the state shown in the drawing, and this second member 26c is coupled to the lower end of the cable 11 through a connecting end portion 26d.

The other end of the knocker 24 is rotatably coupled to the unit body 17a by a pin 24a. When the cable 11 is pulled in the upward direction of the drawing, one end of the knocker 24 is pulled up through the second member 26c. When the right lever 12 is operated to pull the cable 11 in the upward direction of the drawing, the knocker 24 therefore rotates around the pin 24a in the clockwise direction of the drawing and presses up a protruding end portion 23a of a piston, which is provided for the master cylinder 23 so as to advance and retract, at a middle portion 24b (see FIG. 4) to generate the hydraulic pressure in the master cylinder 23. The operating liquid with increased pressure is set to be discharged from a joint 23b on a discharge side through a pressurized liquid channel 23c to the actuator 10, and then from the actuator 10 through the hose 9 to actuate the front wheel brake 2.

When this right lever 12 is independently operated, the coupling member 26 remains pressed down by the coil spring 28 to be immovable. As a result, the load distribution lever 25 is also immovable, and the rear wheel brake 7 is not actuated. Only the front wheel brake 2 therefore comes to be independently actuated.

On the other hand, when the left lever 15 is independently operated to pull up the cable 16 in the upward direction of the drawing, the middle portion of the load distribution lever 25 is pulled in the upward direction of the drawing through the connecting end portion 25b. Since the coupling member 26 is pressed down by the coil spring 28 at this time, the load distribution lever 25 rotates in the counterclockwise direction of the drawing around the pin 25a. As a result, the cable 18 is pulled through the connecting end portion 25c to actuate the rear wheel brake 7 through the input limiting means 20 and the cable 19.

When the traction for the cable 16 increases to overcome the resilience of the spring coil 28, the entire load distribution lever 25 moves in the upward direction of the drawing. By this, the coupling member 26 moves in the upward direction of the drawing to rotate the knocker 24 through the pin 26b, and the hydraulic pressure is generated in the master cylinder 23 to actuate the front-wheel brake 2. At the same time, the pulling of the cable 18 continues, and the rear wheel brake 7 continues to operate into a combined braking state in which the front wheel and rear wheel brakes are simultaneously operating. At this time, the braking forces to the front wheel and rear wheel brakes 2 and 7 are distributed according to a lever ratio which is a ratio of distances from the connecting end portion 25b as the center to the pin 25a and to the connecting end portion 25c.

As apparent from FIG. 4, a piston 23e freely advances and retracts within a liquid chamber 23d of the master cylinder 23, and this piston 23e is pressed at the protruding end portion 23a by the middle portion 24b of the knocker 24 to advance and to retract. The liquid chamber 23d communicates with the reservoir 27. The reservoir 27 is provided in the unit body 17a and integrated with the master cylinder 23. Reference numeral 29 in the drawing denotes a brake switch, which detects the load distribution lever 25 moving in the upward direction of the drawing to thereby detect the operation of the rear wheel brake 7 and the operating state of the CBS.

Furthermore, though omitted in FIG. 4, a front-wheel brake sensor 56 (FIGS. 2 and 5) is provided to detect an angle of inclination of the knocker 24 and the stroke amount of the piston 23e. The front wheel brake sensor 56 indirectly detects the hydraulic pressure generated in the master cylinder 23. Note that the front wheel brake sensor 56 may be configured to directly detect the hydraulic pressure of the master cylinder 23.

The reservoir 27 is integrated with the actuator 10. Within this actuator 10, a normally open valve 31 and a normally closed valve 32 are provided. During pressurization, operating liquid is transferred from the pressurized liquid channel 23c of the master cylinder 23 to the normally open valve 31 and further supplied from the normally open valve 31 to the front wheel brake 2 to actuate the front wheel brake 2. On the other hand, during depressurization, the operating liquid is returned from the normally closed valve 32 through a depressurized liquid channel 32a and a hole 27a directly to the reservoir 27.

FIG. 5 shows an example of the actuator 10. The actuator 10 is provided with the normally open and normally closed valves 31 and 32 within the body 30. The normally open and normally closed valves 31 and 32 each are solenoid valves. The normally open valve 31 is in the state always remaining open, which normally allows the operating liquid discharged from the master cylinder unit 17 to flow to the front-wheel brake 2 side, and is connected in parallel to a one-way valve 33 allowing backflow. The normally closed valve 32 assumes the state always remaining closed, which allows the operating liquid on the front wheel brake 2 side to return to the reservoir 27 (see FIG. 4) of the master cylinder unit 17 only when the solenoid is excited.

The opening and closing of the normally open and normally closed valves 31 and 32 are controlled by the ECU 14. The closing of the normally open valve 31 and the opening of the normally closed valve 32 causes the hydraulic pressure to be shut off for a short time to stop controlling the front wheel brake 2, thus preventing front wheel lock.

FIG. 6 shows a stroke limiting type as an example of the input limiting means 20. In a body 50, a spring 52 connected to one end of the cable 18 through a joint piece 51 is arranged, and the other end of the spring 52 is connected to one end of the cable 19 through a coupling plate 53. The coupling plate 53 assumes a wide shape. When pulled in the left direction of the drawing by a predetermined stroke, the coupling plate 53 abuts on a stopper 54 provided on the body 50, and the movement thereof is restricted, thus limiting the input.

FIG. 7 shows an ideal distribution curve A and a real distribution curve BC as a setting example in distribution of the braking forces of the front wheel and rear wheel brakes in the CBS. The axis of abscissa indicates the braking force of the front wheel, and the axis of ordinate indicates the braking force of the rear wheel. Among the straight lines shown in the drawing, diagonal straight lines extending to upper right from the axis of abscissa are lock lines of the front wheel, and diagonal straight lines extending to lower right from the axis of ordinate are lock lines of the rear wheel. For each of the front and rear wheels, a plurality of lock lines are shown each corresponding to each road surface state (indicated by the coefficient µ of friction). A curve sequentially connecting each intersecting points of the lock lines of the front and rear wheels for a certain µ becomes the ideal distribution curve A.

The braking force distribution in this embodiment, as indicated by the straight line B in the drawing, initially changes along the ideal distribution curve A into a straight line extending to upper right, then bends at a point P before a point of intersection with the lock line having µ of 0.4 on the rear wheel side, and changes into line extending lower right toward a point Q having µ of 0.4 on the ideal distribution curve A.

Thus, the rear wheel brake of the CBS in this embodiment sets a criterion to a road surface state with µ of 0.4 and is designed not to cause rear wheel lock when µ is not more than 0.4. Such a setting is enabled by setting the braking force distribution in the CBS, that is, by setting the lever ratio of the load distribution lever 25 shown in FIG. 3, and the limitation of the stroke by the input limiting means 20. Note that a portion indicated by a dashed line D in FIG. 7 is an assumed state in the case where the stroke is not limited by the input limiting means 20, and in this case, the front wheel comes to be locked, for example, on a road surface with µ of not more than 0.7.

Next, a description is given of an operation of this embodiment. When the right lever 12 is independently operated, hydraulic pressure is generated in the master cylinder unit 17 by the rotation of the knocker 24, and the right lever 12 controls only the front wheel brake 2 through the actuator 10. In the actuator 10, when the operation signal of the right lever 12 and the vehicle speed signal detected by the front wheel rotation speed sensor 13 show that the condition is satisfied for causing lock, the ECU 14 controls the normally open and normally closed valves 31 and 32 of the actuator 10 to prevent front wheel lock. At this time, the rear wheel brake 7 is not related since the load distribution lever 25 does not operate.

On the other hand, when the left lever 15 is independently operated, the load distribution lever 25 of the master cylinder unit 17 operates to properly distribute braking force to the front wheel and rear wheel brakes 2 and 7. At this time, at a predetermined µ (µ=0.4 in this embodiment), the rear wheel brake limits the input by the input limiting means 20 to stop the braking force of the rear wheel brake 7, thus preventing lock.

In this state, as shown in FIG. 7, the braking force bends at the point P and changes toward the point Q having µ of 0.4 on the ideal distribution curve A. Accordingly, the braking force distributed to the front wheel brake side is reduced, thus preventing rear wheel lock on the road surface with µ of not more than 0.4.

On the other hand, the braking force on the front wheel brake side is not restricted, and the braking force gradually increases into a region where the front wheel could lock up. However, in this state, the actuator 10 of the front wheel ABS actuates the aforementioned antilock operation to prevent front wheel lock.

Consequently, when the left lever 15 is independently operated into the combined brake operating state, the front wheel and rear wheel brakes 2 and 7 operate in combination. The braking forces of each of the brakes of the front and rear wheels 1 and 8 are controlled to be properly distributed by means of the CBS, thus preventing each wheel from locking up.

Moreover, in the case where the right lever 12 is independently operated to brake only the front wheel brake 2 when the CBS is not operating, the front wheel lock can be prevented by the front wheel ABS. Consequently, lock of the front wheel 1 can be prevented in any of cases where the front wheel brake is independently operated and where the CBS is operating.

Moreover, even while the CBS is working, the front wheel lock can be prevented by the front wheel ABS when large braking force of the front wheel is generated in a state where the input is limited on the rear wheel brake side by the input limiting means 20.
In addition, with the CBS, part of the braking force on the rear wheel brake 7 side is distributed to the front wheel brake 2 side to reduce the braking force borne by the front wheel brake 2 side. This can achieve a synergistic effect, i.e. a small influence at the time of front wheel lock and a large tolerance in judging whether to actuate the ABS.

Furthermore, the ABS is provided only on the front wheel brake side, and the front wheel rotation speed sensor 13 is also provided only on the front-wheel side, thus reducing the number of components and achieving reduction in costs of the entire brake device as well as enabling weight reduction. Moreover, installation of the wheel rotation speed sensor on the rear wheel side can be omitted. The acceleration sensor 55 which can be more flexibly arranged in the vehicle body is provided instead, and various different types of vehicles can commonly use the components, thus reducing the costs. The flexibility in design around the rear wheel is greatly enhanced.

Moreover, the input limiting means 20 for the rear wheel brake 7 is arranged between the master cylinder unit 17 of the CBS and the rear wheel brake 7. It is therefore possible to cancel an input of not less than a predetermined value which can cause lock of the rear wheel 8 when the rear wheel brake is operating. As a result, if the input to be limited by the input limiting means is previously set so as to prevent an input of not less than the braking force which is applied when the lock is caused in a predetermined road surface state, the rear wheel lock can be prevented in the predetermined road surface state only by the CBS and the input limiting means 20 without the rear wheel ABS.

In addition, the front wheel ABS and the CBS are used in combination, and the actuator 10 of the front wheel ABS and the master cylinder unit 17 of the CBS are constituted as the unitary brake modulator unit 40. Accordingly, the brake modulator unit can be compact, and the number of components can be reduced, thus resulting in lower costs. Moreover, since the brake modulator unit 40 is arranged within the front cover 3, space within the front cover can be efficiently used. Furthermore, the brake modulator unit 40 is not viewed from the outside, thus achieving a better exterior.
Furthermore, the front wheel ABS is provided only on the front wheel brake side, thus achieving reduction in size and weight and further reduction in costs.

Moreover, since the depressurized liquid channel 32a of the front wheel ABS is directly connected to the reservoir 27 of the master cylinder unit 17, a pump and a separate reservoir, which are conventionally provided, are not necessary, and the use of the same is eliminated. The structure is therefore simplified and reduced in size, and the number of components and the costs can be reduced. Accordingly, this brake device is suitable for the application to vehicles with arrangement space and costs restricted such as a compact scooter.

In addition, the rear wheel brake 7 side is made to be a drum type and to be operable by a cable, thus eliminating the need for a hydraulic mechanism, which could increase the costs. Also in this regard, a complicated structure does not need to be added, and lower costs can be achieved.

Next, a description is given of a control of the front wheel ABS. FIG. 10 shows a method of judging the road surface µ in the ECU 14 as road surface condition judging means. When the judgment starts, first, the reduction in front wheel rotation speed is calculated to judge whether the road is the low µ road (S·1). As shown in FIG. 9, this judgment is calculated according to what is previously set from the magnitude of the brake input and the front-wheel rotation speed when braking is applied to the front wheel. At this time, the magnitude of the brake input is determined by the detection signal of the front wheel brake sensor 56, and the front-wheel rotation speed is determined by the detection signal of the front wheel rotation speed sensor 13, respectively.

When the reduction in the front wheel rotation speed for a predetermined period of time is considerably large as shown by a of FIG. 9, the road is judged to be the low µ road where the front wheel has locked up, thus finishing the judgment of the road surfaces µ. Then, the ABS is actuated (S.7). Otherwise, the procedure proceeds to next S.2. Herein, the value a as the criterion for the low µ road is previously set according to various conditions.

In S.2, comparison is made whether the deceleration obtained based on the vehicle body acceleration detected by the acceleration sensor 55 is not less than 0.8G. When the deceleration is not less than 0.8G, another comparison is made in S·3 whether the deceleration is not more than 0.9G. When the deceleration is less than 0.8G, the procedure is returned to S-1 and repeated.

In S-3, when the deceleration is less than 0.9G (that is, deceleration in the range from 0.8 to 0.9 G), the procedure proceeds to next S-4. When the deceleration is more than 0.9 G, the road is judged to be the high µ road, finishing the judgment of the road surfaces µ. Then, the ABS is not actuated (S-5).

Herein, the comparison whether the deceleration is in the range from 0.8 to 0.9G is just an example, and this range can be freely set according to the specification of the front wheel ABS.

In S-4, the magnitude of the hydraulic pressure of the brake, indicating the magnitude of the brake input, is compared with a criterion n. When the magnitude is less than n, the road is judged to be the high µ road even when the deceleration is in the range from 0.8 to 0.9G. Then, the procedure proceeds to S.5. When the magnitude is not less than n, the road is judged to be the medium µ road. Then, the procedure proceeds to S.6, and the judgment of the road surface µ is finished. This criterion n can be also freely set according to the specification of the front wheel ABS.

When the road is judged to be the medium µ road, the ABS is actuated (S-6). The operation of the ABS causes deceleration as indicated by a dashed dotted line in FIG. 9, which shows c approximate to the reduction in speed b of the standard line (high µ road) after a predetermined period of time T and the speed changes closely along the estimated vehicle body speed.

When the road is judged to be the medium µ road as described above, in this embodiment, the normally open valve 31 is closed, and the normally closed valve 32 is opened by an instruction of the ECU 14 to adjust the hydraulic pressure fed to the front wheel brake 2 toward depressurized side. This allows the front wheel brake 2 to perform the ABS operation. Thus, it is possible to easily judge the medium µ road and easily actuate the ABS on the medium µ road.

In addition, installation of the wheel rotation speed sensor on the rear wheel side can be omitted, and the acceleration sensor 55 with high flexibility in installation on the vehicle body is provided instead. Accordingly, many different types of vehicles can commonly use the components, thus reducing the costs. In addition, the flexibility in design around the rear wheel can be dramatically enhanced.

Moreover, by controlling the front wheel ABS, upon the judgment of the road surface to have a coefficient of friction within the predetermined range, the hydraulic pressure applied to the front wheel brake is controlled to reduce. The predetermined range of the road surface µ can be therefore set as the operation range of the ABS. In addition, in the judgment on the friction coefficient range, the acceleration of the vehicle body and the hydraulic pressure of the brake are set to be correlated to each other. Accordingly, the road can be judged to have a coefficient of friction within the predetermined range when the acceleration of the vehicle body is in a predetermined state and the hydraulic pressure of the brake is not more than a predetermined level. The judgment on the friction coefficient range can be therefore easily made by the acceleration of the vehicle body and the hydraulic pressure of the brake.

Note that the invention of this application is not limited to the aforementioned embodiment, and various modifications and applications are possible within the principle of the invention. For example, the CBS may not be concurrently used, and only the front wheel may be provided with the ABS.
1: FRONT WHEEL
2: FRONT WHEEL BRAKE
7: REAR WHEEL BRAKE
8: REAR WHEEL
10: ACTUATOR
12: RIGHT LEVER
13: FRONT WHEEL ROTATION SPEED SENSOR
14: ECU
15: LEFT LEVER
17: MASTER CYLINDER UNIT
20: INPUT LIMITING MEANS
27: RESERVOIR
32A: DEPRESSURIZED LIQUID CHANNEL
40: BRAKE MODULATOR UNIT
55: ACCELERATION SENSOR
56: FRONT WHEEL BRAKE SENSOR
FIG. 2
RIGHT LEVER INPUT SYSTEM
FRONT WHEEL
REAR WHEEL
LEFT LEVER INPUT SYSTEM
FIG. 4
TO FRONT WHEEL BRAKE
FIG. 6
TO CBS SIDE
TO REAR WHEEL BRAKE SIDE
FIG. 7
REAR WHEEL BRAKING FORCE
FRONT WHEEL BRAKING FORCE
FIG. 9
FRONT WHEEL ROTATION SPEED
REFERENCE (HIGH µ ROAD)
MEDIUM µ ROAD
LOW µ ROAD
TIME
FIG. 10
START ROAD SURFACE µ JUDGMENT
IS REDUCTION OF FRONT WHEEL ROTATION SPEED LARGE?
LOCK UP
IS DECELERATION NOT LESS THAN 0.8G?
IS DECELERATION NOT MORE THAN 0.9G?
IS INPUT (HYDRAULIC PRESSURE) NOT LESS THAN CRITERION N?
JUDGED TO BE HIGH µ ROAD (ABS IS NOT ACTUATED)
JUDGED TO BE MEDIUM µ ROAD (ABS IS ACTUATED)
JUDGED TO BE LOW µ ROAD (ABS IS ACTUATED)

## Claims

1. A brake device for a motorcycle including an antilock modulator preventing wheel lock, comprising:
road surface judging means for calculating a road surface condition of a travel road based on respective detection information from
a front wheel rotation speed sensor (13) for detecting rotation speed of a front wheel (1),
brake operation detecting means for detecting a brake operating state,
an acceleration sensor (55) for detecting acceleration of a vehicle body, and
brake pressure detecting means for detecting brake hydraulic pressure,
wherein the antilock brake modulator (ABS) is a front wheel antilock modulator provided only on a front wheel brake side (2),
the brake device for a motorcycle being **characterised in that**
in a case where the brake hydraulic pressure is detected to be not less than a predetermined level (n) when the acceleration of the vehicle body is in a predetermined state, the coefficient of friction (µ) is judged to be within a predetermined friction coefficient range.

2. The brake device for a motorcycle according to claim 1,
**characterized in that**
when the road surface is judged by the road surface judging means to have a coefficient of friction (µ) within the predetermined friction coefficient range, the front wheel antilock brake modulator (ABS) is controlled in the direction to reduce the hydraulic pressure applied to the front wheel brake (2).

3. The brake device for a motorcycle according to any of the preceding claims,
**characterized by** comprising:
a combined brake modulator (CBS) distributing an output to the front wheel brake (2) and a rear wheel brake (7) according to an operation of a brake operator (15).

## Patentansprüche

1. Bremsvorrichtung für ein Motorrad, die einen Antiblockiermodulator, der ein Blockieren eines Rades verhindert, beinhaltet, umfassend:
ein Fahrbahnoberflächenbeurteilungsmittel zur Berechnung einer Fahrbahnoberflächeneigenschaft einer befahrenen Fahrbahn anhand zugehöriger Detektionsinformation aus
einem Vorderraddrehgeschwindigkeitssensor (13) zur Detektion der Drehgeschwindigkeit eines Vorderrads (1),
ein Bremsvorgangdetektionsmittel zu Detektion eines Bremsvorgangszustands,
ein Beschleunigungssensor (55) zur Detektion der Beschleunigung eines Fahrzeugkörpers, und
ein Bremsdruckdetektionsmittel zur Detektion eines hydraulischen Bremsdrucks,
worin der Antiblockierbremsmodulator (ABS) ein Vorderrad-Antiblockiermodulator ist, der lediglich auf einer Vorderradbremsenseite (2) vorgesehen ist,
worin die Bremsvorrichtung für ein Motorrad **dadurch gekennzeichnet ist, dass**
in einem Fall, bei dem detektiert wird, dass der hydraulische Bremsdruck nicht geringer als ein vorgegebener Pegel (n) ist, wenn die Beschleunigung des Fahrzeugkörpers in einem vorgegebenen Zustand ist, der Reibungskoeffizient (µ) so beurteilt wird, dass er in einem vorgegebenen Reibungskoeffizientenbereich liegt.

2. Bremsvorrichtung für ein Motorrad gemäß Anspruch 1,
**dadurch gekennzeichnet, dass**
wenn die Fahrbahnoberfläche durch das Fahrbahnoberflächenbeurteilungsmittel so beurteilt wird, dass sie einen Reibungskoeffizient (µ) innerhalb eines vorgegebenen Reibungskoeffizientenbereichs aufweist, der Vorderradantiblockierbremsmodulator (ABS) so in eine Richtung gesteuert wird, dass der an der Vorderradbremse (2) anliegende, hydraulische Druck reduziert wird.

3. Bremsvorrichtung für ein Motorrad gemäß einem der vorhergehenden Ansprüche,
**dadurch gekennzeichnet, dass** sie umfasst:
einen kombinierten Bremsmodulator (CBS) der ein Ausgangssignal an die Vorderradbremse (2) und eine Hinterradbremse (7) gemäß einer Betätigung einer Bremsbetätigungsvorrichtung (15) verteilt.

## Revendications

1. Dispositif de freinage pour motocyclette comportant un modulateur antiblocage destiné à empêcher tout blocage de roue, comportant :
un moyen de jugement de surface de route pour calculer une condition de surface de route d'une voie de circulation sur la base d'informations de détection respectives à partir
d'un capteur de vitesse de rotation de roue avant (13) permettant de détecter la vitesse de rotation d'une roue avant (1),
d'un moyen de détection de fonctionnement de freinage permettant de détecter un état opérationnel de freinage,
d'un capteur d'accélération (55) permettant de détecter l'accélération d'une carrosserie, et
d'un moyen de détection de pression de freinage permettant de détecter la pression hydraulique de freinage,
dans lequel le modulateur de freinage antiblocage (ABS) est un modulateur antiblocage de roue avant disposé uniquement au niveau d'un frein de roue avant (2),
le dispositif de freinage pour motocyclette étant **caractérisé en ce que**
lorsque la pression hydraulique de freinage est détectée comme n'étant pas inférieure à un niveau prédéterminé (n) lorsque l'accélération de la carrosserie est dans un état prédéterminé, le coefficient de friction (µ) est jugé comme entrant dans une fourchette de coefficient de friction prédéterminée.

2. Dispositif de freinage pour motocyclette selon la revendication 1, **caractérisé en ce que** lorsque la surface de route est jugée par le moyen de jugement de surface de route comme ayant un coefficient de friction (µ) dans la fourchette de coefficient de friction prédéterminée, le modulateur de freinage antiblocage de roue avant (ABS) est contrôlé dans le sens permettant de réduire la pression hydraulique appliquée au frein de roue avant (2).

3. Dispositif de freinage pour motocyclette selon l'une des revendications précédentes, **caractérisé en ce qu'**il comporte :
un modulateur de freinage combiné (CBS) distribuant une sortie vers le frein de roue avant (2) et un frein de roue arrière (7) selon une action d'un opérateur de freinage (15).
